# EUROPÄISCHE PATENTSCHRIFT

(11) **EP 2 591 951 B1**
(45) Veröffentlichungstag und Bekanntmachung des Hinweises auf die Patenterteilung: **29.07.2015**
(21) Anmeldenummer: 13153594.0
(22) Anmeldetag: 21.12.2011
(51) Int. Cl.: B60P 7/08

(54) **Ladungssicherungsschiene**
Load securing rail
Rail de sécurisation de charge

(30) Priorität: 11.01.2011 DE 102011008254
(43) Veröffentlichungstag der Anmeldung: 15.05.2013
(62) Teilanmeldung aus: 11010064.1
(73) Patentinhaber: Burg Silvergreen GmbH, 89231 Neu-Ulm (DE)
(72) Erfinder: Lima, Joachim, 89601 Schelklingen (DE); Rink, Wolfgang, 89134 Blaustein (DE); Pröbstle, Roman, 89359 Kötz (DE)
(74) Vertreter: Manitz, Finsterwald & Partner GbR

(56) Entgegenhaltungen:
- WO-A1-01/15933
- DE-U1- 8 617 373
- DE-U1- 9 409 059
- DE-U1-202009 011 410
- US-A1- 2004 028 497

## Beschreibung

Die Erfindung betrifft eine Ladungssicherungsschiene zur Anbringung an einer Wand oder Decke eines Laderaums eines Transportfahrzeuges oder -behälters, welche eine Verankerungsmittelaufnahme eines ersten Typs umfasst, die eine sich in Längsrichtung der Ladungssicherungsschiene erstreckende erste Verankerungslinie definiert.

Ladungssicherungsschienen dieser Art wie z.B. DE 9409059 U sind grundsätzlich bekannt und werden auch als Anker- oder Zurrschienen bezeichnet. Sie dienen zur Sicherung von Ladung in Nutzfahrzeugaufbauten oder Containern, indem sie die Verankerung von Ladungssicherungselementen, wie beispielsweise von Zurrgurten oder Sperrstangen, ermöglichen. Üblicherweise sind herkömmliche Ladungssicherungsschienen jeweils für ein bestimmtes Verankerungssystem ausgelegt.

Des Weiteren sind herkömmliche Ladungssicherungsschienen aus Edelstahl oder verzinktem Stahlblech hergestellt. Gerade letzteres material erweist sich insofern als problematisch, als der Einsatz verzinkter Teile nach geltenden Hygienebestimmungen für die Beförderung von Lebensmitteln unerwünscht ist. Darüber hinaus sind Ladungssicherungsschienen mit galvanischem Überzug bei der Verwendung von chemischen Reinigungsmitteln und bei Beschädigung korrosionsgefährdet. Dementsprechend bereitet die Reinigung von Stahlschienen Probleme, vor allem können schwer zugängliche Stellen der Schienen, sogenannte tote Winkel, Brutstätten von Bakterien und Kleingetier sein. Davon abgesehen sind herkömmliche Stahlschienen nur in einer bestimmten Länge erhältlich, sodass bei einer Erstreckung der Ladungssicherungsschiene über die gesamte Länge eines Nutzfahrzeugaufbaus oder Containers unter Umständen eine Vielzahl von Schienenteilen aneinandergefügt werden müssen. Außerdem benötigen bekannte verzinkte Stahlschienen, wenn sie bündig mit einer Seitenwand eines Laderaums abschließen sollen, oben und unten zusätzliche Vertiefungen in der Seitenwand, in welchen sie verklebt und zusätzlich vernietet werden. Dabei müssen verzinkte Stahlschienen für den Klebevorgang vorbehandelt werden.

Der Erfindung liegt die Aufgabe zugrunde, eine Ladungssicherungsschiene zu schaffen, welche vielseitiger einsetzbar ist.

Zur Lösung der Aufgabe ist eine Ladungssicherungsschiene mit den Merkmalen des Anspruchs 1 vorgesehen.

Die erfindungsgemäße Ladungssicherungsschiene zeichnet sich insbesondere durch eine zusätzliche Verankerungsmittelaufnahme eines zweiten Typs aus, welcher von dem ersten Typ verschieden ist, wobei die Verankerungsmittelaufnahme des zweiten Typs eine zweite Verankerungslinie definiert, die sich im Wesentlichen parallel zu der ersten Verankerungslinie erstreckt.

Die erfindungsgemäße Ladungssicherungsschiene weist mit anderen Worten zwei unterschiedliche Verankerungsmittelaufnahmen auf, welche dementsprechend die Verankerung von unterschiedlichen Verankerungmitteln ermöglichen. So können in der Verankerungsmittelaufnahme des ersten Typs Verankerungsmittel einer ersten Art, beispielsweise an Zurrgurten befestigte Gurtschlösser, und in der Verankerungsmittelaufnahme des zweiten Typs Verankerungsmittel einer zweiten Art, beispielsweise Sperrstangen, verankert werden. Man ist mit der Auswahl und dem Einbau der Ladungssicherungsschiene also nicht auf ein bestimmtes Verankerungssystem festgelegt, sondern kann nach Bedarf auf zwei unterschiedliche Verankerungssysteme zurückgreifen.

Dadurch, dass die Verankerungslinien in Längsrichtung der Ladungssicherungsschiene verlaufen und sich die Verankerungsmittelaufnahmen insbesondere über die gesamte Länge der Ladungssicherungsschiene erstrecken, besteht je nach konkreter Ausbildung der Verankerungsmittelaufnahmen bzw. der zu verankernden Verankerungsmittel grundsätzlich die Möglichkeit, das Verankerungsmittel an einer beliebigen Längsposition der Ladungssicherungsschiene zu fixieren, wodurch die Flexibilität bei der Sicherung von Ladung erhöht ist.

Vorteilhafte Ausbildungen der Erfindung sind den Unteransprüchen, der Beschreibung und der Zeichnung zu entnehmen.

Gemäß einer Ausführungsform umfasst die Ladungssicherungsschiene außerdem noch eine Verankerungsmittelaufnahme eines dritten Typs, welcher von dem ersten und zweiten Typ verschieden ist, wobei die Verankerungsmittelaufnahme des dritten Typs eine dritte Verankerungslinie definiert, die sich im Wesentlichen parallel zu der ersten und zweiten Verankerungslinie erstreckt. Durch die Ausbildung der Ladungssicherungsschiene mit drei unterschiedlichen Verankerungsmittelaufnahmen ist die Ladungssicherungsschiene für die Verwendung von zumindest drei unterschiedlichen Verankerungssystemen vorbereitet, sodass sich die Ladungssicherungsschiene insgesamt noch vielseitiger einsetzen lässt und eine noch individuellere Sicherung von Ladung möglich ist.

Die Verankerungsmittelaufnahmen können gewählt sein aus der Gruppe, die umfasst:
- eine Verankerungsnut mit doppel-V-förmigem Querschnitt, welcher insbesondere durch einen W-förmigen hinteren Wandabschnitt und zwei sich daran anschließende und Hinterschneidungen bzw. serifenartige Überhänge bildende vordere Wandabschnitte definiert ist;
- eine im Wesentlichen T-förmige Verankerungsnut, die an ihrer Vorderseite durch zwei zueinander beabstandete vordere Wandabschnitte definiert ist; und
- eine Vielzahl von zueinander beabstandeten Verankerungsfenstern.

Derartige Verankerungsmittelaufnahmen eignen sich besonders gut zur Verankerung von Zurrgurtschlössern, Lade- oder Sperrbalken oder Sperrstangen.

Es versteht sich von selbst, dass die Reihenfolge der Anordnung der verschiedenen Verankerungsmittelaufnahmen grundsätzlich beliebig ist. Das heißt, dass nicht notwendigerweise die T-förmige Verankerungsnut zwischen der doppel-V-förmigen Verankerungsnut und den Verankerungsfenstern angeordnet sein muss. Ebenso ist es möglich, die doppel-V-förmige Verankerungsnut zwischen der T-förmigen Verankerungsnut und den Verankerungsfenstern vorzusehen oder die Verankerungsfenster zwischen der doppel-V-förmigen Verankerungsnut und der T-förmigen Verankerungsnut anzuordnen.

Des Weiteren ist darauf hinzuweisen, dass für den Fall, dass die Ladungssicherungsschiene lediglich zwei Verankerungsmittelaufnahmen aufweist, grundsätzlich alle möglichen Kombinationen von unterschiedlichen Verankerungsmittelaufnahmetypen in Betracht kommen, d.h. eine doppel-V-förmige Verankerungsnut mit T-förmiger Verankerungsnut, eine doppel-V-förmige Verankerungsnut mit Verankerungsfenstern oder eine T-förmige Verankerungsnut mit Verankerungsfenstern.

Gemäß einer bevorzugten Ausführungsform sind die Verankerungsmittelaufnahmen mit Ablauföffnungen versehen, durch welche Flüssigkeit aus den Verankerungsmittelaufnahmen ablaufen kann. Beispielsweise kann mindestens eine Ablauföffnung in einem unteren der vorderen Wandabschnitte der doppel-V-förmigen und/oder T-förmigen Verankerungsnut und/oder an einer Unterseite wenigstens eines Verankerungsfensters vorgesehen sein. Die Ablauföffnungen ermöglichen das Ablaufen von Schmutzwasser aus der Ladungssicherungsschiene nach einer Reinigung derselben mittels beispielsweise eines Dampf-Hochdruckreinigers. Die Ladungssicherungsschiene lässt sich auf diese Weise leicht und zuverlässig sauber halten, insbesondere wird die Ansammlung von Bakterien und Kleingetier wirksam verhindert. Die Ladungssicherungsschiene erleichtert somit die Einhaltung von Hygienebestimmungen, wie sie beispielsweise für den Transport von Lebensmitteln gelten.

Vorteilhafterweise bildet eine Ablauföffnung einer Verankerungsnut gleichzeitig einen Teil einer Ausklinkung zum Einsetzen eines Verankerungsmittels in die Verankerungsnut. Die Ablauföffnung erfüllt in diesem Fall eine Doppelfunktion, indem sie zum einen als Eintauchöffnung für das Einsetzen eines Verankerungsmittels dient und gleichzeitig das Ablaufen von Schmutzwasser ermöglicht. Eine zusätzliche Eintauchöffnung oder Ausklinkung braucht in diesem Fall also nicht vorgesehen zu werden.

Gemäß einer vorteilhaften Ausführungsform ist die Ladungssicherungsschiene durch ein Strangprofil, insbesondere aus Aluminium, bevorzugt eloxiertem Aluminium, gebildet. Aufgrund dieses Materials ist die Ladungssicherungsschiene nicht nur lebensmitteltauglich, sondern sie lässt sich als Strangprofil in grundsätzlich beliebiger Länge einstückig herstellen. Auf diese Weise ist es möglich, einen Nutzfahrzeugaufbau oder Container über seine gesamte Länge gesehen mit einer einstückigen Ladungssicherungsschiene auszustatten, was bei gleichzeitig vereinfachter Montage zu einer erhöhten Stabilität beiträgt und somit letztlich eine erhöhte Ladungssicherheit gewährleistet.

Bevorzugt weist die Ladungssicherungsschiene im Querschnitt gesehen einen im Wesentlichen trapezförmigen Umriss auf, dessen längere Grundseite die Vorderseite der Ladungssicherungsschiene bildet, d.h. also die Seite, über welche die Verankerungsmittelaufnahmen zugänglich sind. Der trapezförmig Umriss der Ladungssicherungsschiene ermöglicht eine zuverlässigere Montage der Ladungssicherungsschiene in der Wand eines Nutzfahrzeugaufbaus oder Containers und insbesondere eine optimierte Übertragung der Kräfte, die von in der Ladungssicherungsschiene verankerten Ladungssicherungselementen auf die Ladungssicherungsschiene ausgeübt werden, auf die Wand. Im Ergebnis trägt der trapezförmige Umriss der Ladungssicherungsschiene also zu einer zuverlässigeren Ladungssicherung bei.

Die Ladungssicherungsschiene kann beispielsweise in eine an den trapezförmigen Umriss der Ladungssicherungsschiene angepasste Mulde in der Wand eines Nutzfahrzeugaufbaus oder Containers eingeklebt sein. Um zu verhindern, dass der Klebestoff durch ein Hineindrücken der Ladungssicherungsschiene in die Mulde verdrängt und die effektive Klebefläche reduziert wird, ist an einer Rückseite der Ladungssicherungsschiene vorteilhafterweise wenigstens eine sich in Längsrichtung der Ladungssicherungsschiene erstreckende Rippe ausgebildet. Alternativ oder zusätzlich kann jeweils ein sich in Längsrichtung der Ladungssicherungsschiene erstreckender Vorsprung in an die Vorderseite angrenzenden Bereichen von Schrägseiten der Ladungssicherungsschiene ausgebildet sein. Die Vorsprünge bzw. die Rippe verhindern, dass die Rückseite und die schrägen Seiten der Ladungssicherungsschiene plan an der die Mulde begrenzenden Wandoberfläche anliegen und wirken somit gewissermaßen als Abstandshalter, welche großflächige Spaltbereiche zwischen der Ladungssicherungsschiene und der Wand definieren, in denen sich Klebstoff sammeln und eine großflächige und zuverlässige Verklebung der Ladungssicherungsschiene in der Wand gewährleisten kann.

Gemäß einer weiteren Ausführungsform bildet die Ladungssicherungsschiene eine Wand eines im Wesentlichen rechteckigen Profilrahmens. In dieser Variante lässt sich die Ladungssicherungsschiene im Randbereich eines Laderaumbodens montieren, beispielsweise als sogenannte Getränkelatte, um zu verhindern, dass Ladung, z.B. Getränkekisten, seitlich aus dem Laderaum herausrutschen können.

Zur Erhöhung der Steifigkeit und somit der Stabilität des Profilrahmens ist vorteilhafterweise eine Stützstrebe zwischen der Ladungssicherungsschiene und einer gegenüberliegenden Wand des Profilrahmens ausgebildet.

Zur einfachen Montage bzw. Demontage der Ladungssicherungsschiene am Laderaumboden ist bevorzugt wenigstens ein, insbesondere sich in Längsrichtung erstreckender Rastvorsprung, an einer Unterseite des Profilrahmens ausgebildet, welcher ein einfaches Einstecken des Profilrahmens in eine am Laderaumboden entsprechend vorgesehene Rastöffnung ermöglicht. Der Rastvorsprung erstreckt sich bevorzugt über die gesamte Länge des Profilrahmens und kann entweder durchgehend ausgebildet oder in längliche Abschnitte unterteilt sein. Der Rastvorsprung kann beispielsweise ein kreuzförmiges Querschnittsprofil aufweisen.

Vorteilhafterweise ist eine, insbesondere an den Rastvorsprung angepasste, Rastnut an einer Oberseite des Profilrahmens ausgebildet. Diese ermöglicht es, mehrere Profilrahmen übereinander zu stecken und somit die Gesamthöhe der Ladungssicherungsschiene nach Bedarf zu erhöhen. Dabei sind der Rastvorsprung und die Rastnut in ihrer Form bevorzugt derart ausgebildet, dass der Rastvorsprung im in die Rastnut eingetauchten Zustand bei Belastung der Ladungssicherungsschiene durch Ladung eine Verriegelung in der Rastnut erfährt, so dass die zusammengesteckten Profilrahmen auch unter Last sicher miteinander verbunden sind.

Nachfolgend wird die Erfindung rein beispielhaft anhand vorteilhafter Ausführungsformen unter Bezugnahme auf die beigefügte Zeichnung beschrieben. Es zeigen:
- Fig. 1: eine Querschnittsansicht einer in eine Wand eingebauten ersten Ausführungsform einer erfindungsgemäßen Ladungssicherungsschiene;
- Fig. 2: eine perspektivische Schnittansicht der Ladungssicherungsschiene von Fig. 1;
- Fig. 3: eine Draufsicht auf die Vorderseite der Ladungssicherungsschiene von Fig. 1;
- Fig. 4: perspektivische Ansichten verschiedener Teilausschnitte der Ladungssicherungsschiene von Fig. 1;
- Fig. 5: Ausschnitte der Ladungssicherungsschiene von Fig. 1 mit unterschiedlichen Ladungssicherungselementen;
- Fig. 6: eine perspektivische Schnittansicht einer zweiten Ausführungsform einer erfindungsgemäßen Ladungssicherungsschiene und eines an einem Abschlussprofil eines Laderaumbodens befestigten Montagewinkels;
- Fig. 7: eine Querschnittsansicht zweier aufeinander gesteckter Ladungssicherungsschienen von Fig. 6; und
- Fig. 8: die Ladungssicherungsschienen von Fig. 7 in perspektivischer Schnittansicht.

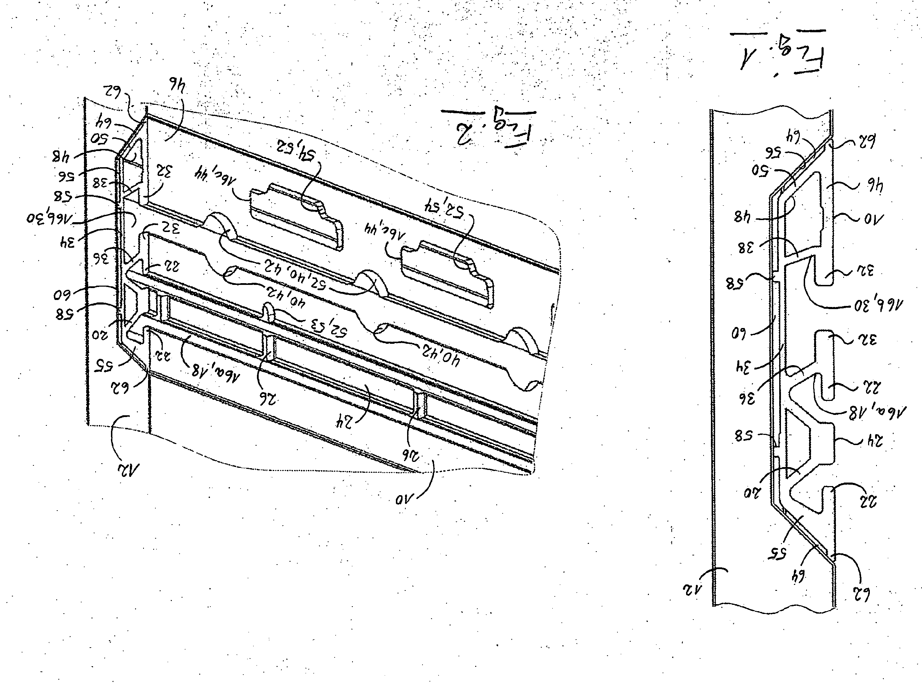

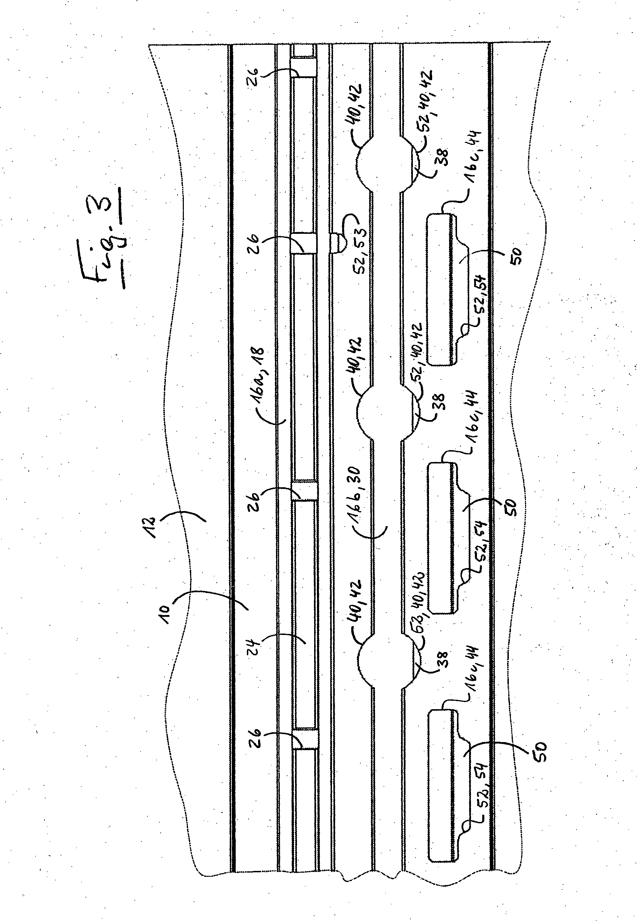

In Fig. 1 bis 5 ist eine Ladungssicherungsschiene 10 gemäß einer ersten Ausführungsform dargestellt, welche in die Seitenwand 12 eines Nutzfahrzeugaufbaus oder Containers integriert ist und sich in Längsrichtung des Nutzfahrzeugsaufbaus oder Containers vorzugsweise über dessen gesamte Länge erstreckt. Dabei ist die Ladungssicherungsschiene 10, wie in Fig. 1 bis 5 gezeigt, vertikal orientiert. Grundsätzlich ist es auch möglich, die Ladungssicherungsschiene 10 in eine Decke des Nutzfahrzeugaufbaus oder Containers zu integrieren, in welchem Fall sie horizontal ausgerichtet sein könnte. Die nachfolgend verwendeten Begriffe "oben" und "unten" beziehen sich auf die in den Figuren gezeigte vertikale Orientierung der Ladungssicherungsschiene 10.

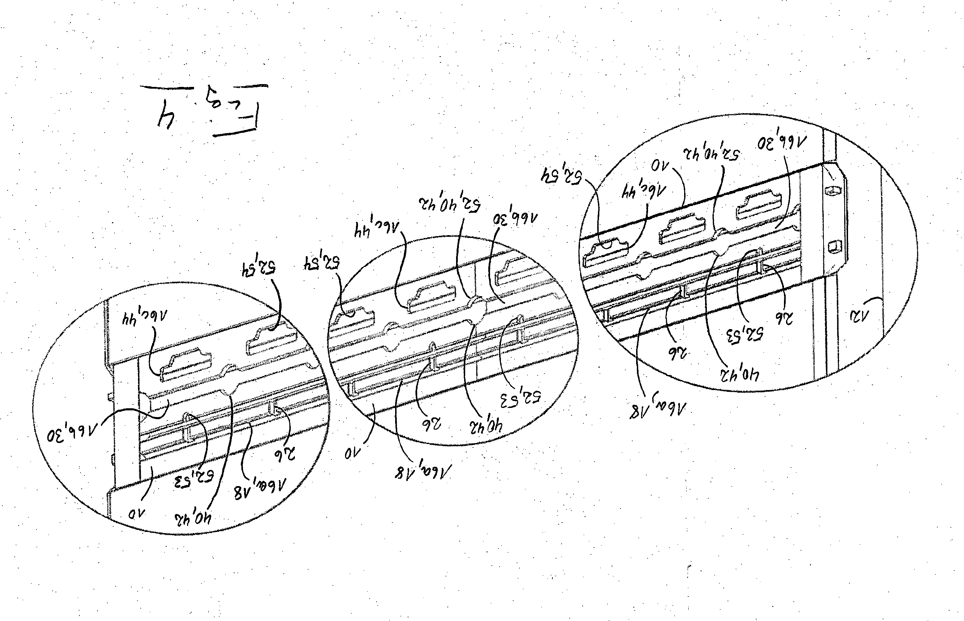

Bei der Ladungssicherungsschiene 10 handelt es sich um ein Strangprofil aus eloxiertem Aluminium, welches grundsätzlich in beliebiger Länge herstellbar ist. Es versteht sich aber von selbst, dass die Ladungssicherungsschiene 10 unter Umständen auch aus mehreren Teilstücken zusammengesetzt werden kann, wie es in dem mittleren Ausschnitt von Fig. 4 dargestellt ist.

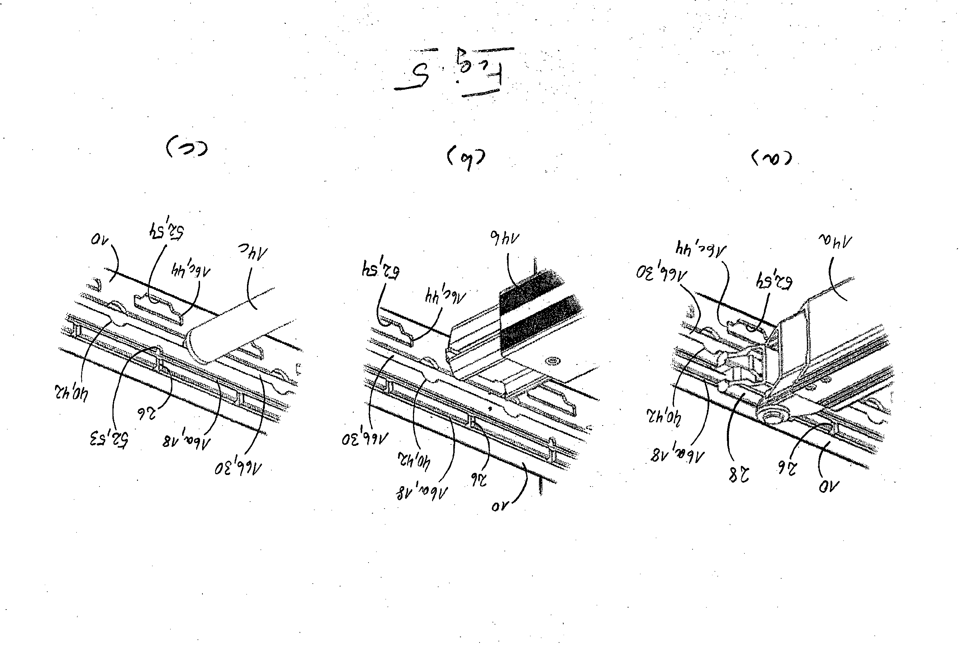

Die Ladungssicherungsschiene 10 ermöglicht die Verankerung unterschiedlicher Ladungssicherungselemente, wie beispielsweise eines Ladebalkens 14a (Fig. 5a), eines Sperrbalkens 14b (Fig. 5b), einer Sperrstange 14c (Fig. 5c) oder eines nicht dargestellten Zurrgurtes.

Zur Verankerung dieser Ladungssicherungselemente 14 weist die Ladungssicherungsschiene 10 an ihrer Vorderseite drei verschiedene Verankerungsmittelaufnahmen 16 auf, welche drei parallel zueinander verlaufende und sich in Längsrichtung der Ladungssicherungsschiene 10 erstreckende Verankerungslinien definieren.

Eine erste Verankerungsmittelaufnahme 16a ist durch eine Verankerungsnut 18 mit doppel-V-förmigen Querschnitt gebildet, welcher durch einen W-förmigen hinteren Wandabschnitt 20 und zwei sich daran anschließende und Hinterschneidungen bildende vordere Wandabschnitte 22 definiert ist. Zwischen den vorderen Wandabschnitten 22 ist der hintere Wandabschnitt 20 zu einem mittleren Steg 24 ausgeformt, dessen Vorderseite mit den Vorderseiten der vorderen Wandabschnitte 22 im Wesentlichen bündig abschließt.

Entlang des mittleren Steges 24 sind Rastvertiefungen 26, im vorliegenden Ausführungsbeispiel Rastnuten, verteilt angeordnet, welche die Einrastung von Verankerungsmitteln der Ladungssicherungselemente 14 ermöglichen, z.B. eines Verankerungsschuhs 28 des Ladebalkens 14a (Fig. 5a) oder eines Gurtschlosses eines Zurrgurtes. Durch die Verrastung eines Ladungssicherungselements 14 in der Verankerungsnut 18 wird eine korrekte Positionierung des Ladungssicherungselements 14 in der Verankerungsnut 18 nicht nur erleichtert, sondern auch dauerhaft sichergestellt.

Unterhalb der doppel-V-förmigen Verankerungsnut 18 verläuft eine zweite Verankerungsmittelaufnahme 16b in der Gestalt einer im Wesentlichen T-förmigen Verankerungsnut 30, die an ihrer Vorderseite durch zwei zueinander beabstandete vordere Wandabschnitte 32 definiert ist. Der obere der vorderen Wandabschnitte 32 der T-förmigen Verankerungsnut 30 geht dabei in den unteren der vorderen Wandabschnitte 22 der doppel-V-förmigen Verankerungsnut 18 über.

An ihrer Rückseite ist die T-förmige Verankerungsnut 30 durch eine im Wesentlichen plane Rückwand 34 der Ladungssicherungsschiene 10 begrenzt. Nach oben, d.h. also zur doppel-V-förmigen Verankerungsnut 18 hin, ist die T-förmige Verankerungsnut 30 durch einen Teilabschnitt 36 des W-förmigen hinteren Wandabschnitts 20 begrenzt. Nach unten ist die T-förmige Verankerungsnut 30 durch eine sich zwischen dem vorderen Wandabschnitt 32 und der hinteren Rückwand 34 erstreckende Stützwand 38 begrenzt.

Entlang der T-förmigen Verankerungsnut 30 verteilt sind eine Vielzahl von Ausklinkungen 40 in die vorderen Wandabschnitte 32 eingeschnitten, welche das Eintauchen eines Verankerungsmittels eines Ladungssicherungselements 14 in die T-förmige Verankerungsnut 30 ermöglichen. Im vorliegenden Ausführungsbeispiel sind die Ausklinkungen 40 im Wesentlichen kreisförmig ausgebildet, d.h. sowohl in dem oberen als auch in dem unteren der vorderen Wandabschnitte 32 der T-förmigen Verankerungsnut 30 sind entsprechende teilkreisförmige Aussparungen 42 ausgebildet. Unterhalb der zweiten Verankerungsmittelaufnahme 16b ist eine dritte Verankerungsmittelaufnahme 16c ausgebildet, welche eine Vielzahl von in Längsrichtung der Ladungssicherungsschiene 10 verteilt angeordneten Verankerungsfenstern 44 umfasst, die jeweils eine im Wesentlichen rechteckige Form aufweisen. Die Verankerungsfenster 44 sind in einen vorderen Wandabschnitt 46 der Ladungssicherungsschiene 10 eingeschnitten, welcher in den unteren der die T-förmige Verankerungsnut 30 begrenzenden vorderen Wandabschnitte 32 übergeht.

Die Verankerungsfenster 44 gewähren Zugang zu einer Hohlkammer 48 der Ladungssicherungsschiene 10, welche durch den vorderen Wandabschnitt 46, die Stützwand 38, die Rückwand 34 und eine untere schräge Außenwand 50 definiert ist, welche die Rückwand 34 mit dem vorderen Wandabschnitt 46 verbindet.

Wird die Ladungssicherungsschiene 10 in einem zum Transport von Lebensmitteln vorgesehenen Fahrzeugaufbau oder Container eingesetzt, so kann es aufgrund von Hygienebestimmungen erforderlich sein, die Seitenwand 12 und somit auch die Ladungssicherungsschiene 10 von Zeit zu Zeit zu reinigen, was üblicherweise mit einem Dampf-Hochdruckreiniger geschieht. Damit Schmutzwasser nach einem Reinigungsvorgang aus den Verankerungsmittelaufnahmen 16 ablaufen kann, ist jede der Verankerungsmittelaufnahmen 16 mit Ablauföffnungen 52 versehen.

Die Ablauföffnungen 52 der doppel-V-förmigen Verankerungsnut 18 besitzen die Gestalt von Kerben 53, die von oben in den unteren der vorderen Wandabschnitte 22 eingeschnitten sind und bis zu dem unteren Teilabschnitt 36 des W-förmigen hinteren Wandabschnitts 20 in den vorderen Wandabschnitt 22 hineinreichen.

Die Ablauföffnungen 52 der T-förmigen Verankerungsnut 30 sind durch die Ausklinkungen 40 gebildet, genauer gesagt durch die in dem unteren der vorderen Wandabschnitte 32 ausgebildeten Aussparungen 42. Die Ausklinkungen 40 erfüllen in diesem Fall also eine Doppelfunktion, indem sie nicht nur das Eintauchen eines Verankerungsmittels in die T-förmige Verankerungsnut 30 ermöglichen, sondern auch das Ablaufen von Wasser aus derselben. Es versteht sich von selbst, dass die Aussparungen 42 in dem unteren der vorderen Wandabschnitte 32 hierzu so tief ausgebildet sein müssen, dass sie bis an die Stützwand 38 heranreichen. Um das Ablaufen von Wasser aus der T-förmigen Verankerungsnut 30 zu erleichtern, ist die Stützwand 38 außerdem zur Vorderseite der Ladungssicherungsschiene 10 hin leicht nach unten geneigt, ähnlich wie auch der untere Teilabschnitt 36 des W-förmigen hinteren Wandabschnitts 20 der doppel-V-förmigen Verankerungsnut 18.

Die Ablauföffnungen 52 der Verankerungsfenster 44 sind durch Ausfräsungen 54 am unteren Rand der Verankerungsfenster 44 gebildet. Ent sprechend den voranstehend beschriebenen Ablauföffnungen 52 erstrecken sich auch diese Ausfräsungen 54 so weit nach unten, dass sie bis an die schräge Außenwand 50 heranreichen. Wie Fig. 1 und 2 zeigen, weist die schräge Außenwand 50 eine Neigung derart auf, dass sich kein Wasser in der Hohlkammer 48 sammeln kann, sondern stattdessen über die als Ablauföffnungen 52 dienenden Ausfräsungen 54 der Verankerungsfenster 44 austritt.

Eine der unteren schrägen Außenwand 50 entsprechende schräge Au-βenwand 55 ist auch an der Oberseite der Ladungssicherungsschiene 10 vorgesehen. Diese obere schräge Außenwand 55 verbindet die Rückwand 34 der Ladungssicherungsschiene 10 mit dem oberen vorderen Wandabschnitt 22 der doppel-V-förmigen Verankerungsnut 18. Gleichzeitig bildet die obere schräge Außenwand 55 einen oberen Teilabschnitt des W-förmigen hinteren Wandabschnitts 20 der doppel-V-förmigen Verankerungsnut 18.

Die vorderseitig im Wesentlichen bündig miteinander abschließenden vorderen Wandabschnitte 22, 32, 46 verleihen der Ladungssicherungsschiene zusammen mit der im Wesentlichen planen Rückwand 34 und den schrägen Außenwänden 50, 55 einen im Wesentlichen trapezförmigen Umriss.

Die Seitenwand 12 des Fahrzeugaufbaus oder Containers ist mit einer Montagemulde 56 zur Aufnahme der Ladungssicherungsschiene 10 versehen, welche einen ebenfalls trapezförmigen Querschnitt aufweist, der so an den Umriss der Ladungssicherungsschiene 10 angepasst ist, dass die Vorderseite der Ladungssicherungsschiene 10 im eingebauten Zustand im Wesentlichen bündig mit der Vorderseite der Seitenwand 12 abschließt.

Die Befestigung der Ladungssicherungsschiene 10 in der Seitenwand 12 erfolgt mittels eine Klebstoffs. Um zu verhindern, dass der Klebstoff beim Hineindrücken der Ladungssicherungsschiene 10 in die Montagemulde 56 aus dieser verdrängt und somit die effektive Klebefläche minimiert wird, sind an der Rückwand 34 der Ladungssicherungsschiene 10 zwei sich in Längsrichtung der Ladungssicherungsschiene 10 erstreckende Rippen 58 ausgebildet, welche im eingebauten Zustand der Ladungssicherungsschiene 10 einen Spaltbereich 60 zwischen sich, der Rückwand 34 der Ladungssicherungsschiene 10 und der die Montagemulde 56 begrenzenden Wandoberfläche definieren, in welchem sich Klebstoff sammeln kann.

Den Rippen 58 ähnelnde Abstandshaltevorsprünge 62 gehen auch aus den äußeren vorderen Wandabschnitten 22, 46 nach außen hervor, sodass ähnliche Spaltbereiche 64 für Klebstoff auch entlang den schrägen Außenwänden 50, 55 und sich daran anschließenden Bereichen der planen Rückwand 34 erstrecken. Durch den in den Spaltbereichen 60, 64 gehaltenen Klebstoff kann eine großflächige und zuverlässige Verklebung der Ladungssicherungsschiene 10 mit der Seitenwand 12 und somit letztlich eine sichere und stabile Befestigung der Ladungssicherungsschiene 10 in der Seitenwand 12 erreicht werden.

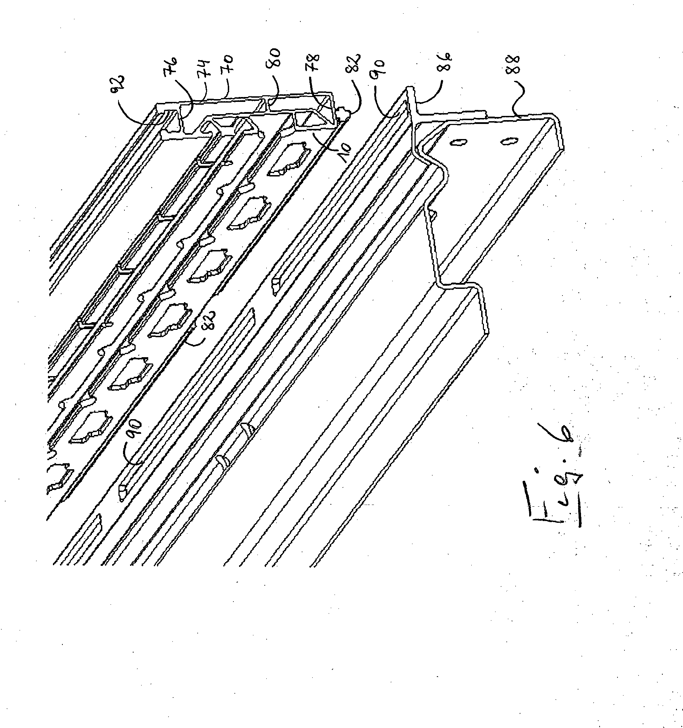

In Fig. 6 bis 8 ist eine Ladungssicherungsschiene gemäß einer zweiten Ausführungsform dargestellt. Die Ladungssicherungsschiene 10 gemäß zweiter Ausführungsform ist im Wesentlichen identisch mit der Ladungssicherungsschiene 10 gemäß erster Ausführungsform ausgebildet und unterscheidet sich von dieser letztlich nur darin, dass sie in ein im Wesentlichen rechteckiges Rahmenprofil 70 integriert ist, und zwar derart, dass die Ladungssicherungsschiene 10 eine vordere Seitenwand 72 des Rahmenprofils bildet. Des Weiteren umfasst das Rahmenprofil 70 eine hintere Wand 74, welche über eine obere Wand 76 und eine untere Wand 78 mit der Ladungssicherungsschiene 10 verbunden ist. Zur Erhöhung der Stabilität des Rahmenprofils 70 erstreckt sich außerdem eine Stützstrebe 80 zwischen der hinteren Wand 74 und der Rückwand 34 der Ladungssicherungsschiene 10.

An der unteren Wand 78 des Rahmenprofils 70 sind mehrere längliche Rastvorsprünge 82 ausgebildet, welche über die Länge des Rahmenprofils 70 verteilt angeordnet sind. Grundsätzlich ist es auch denkbar, einen sich über die gesamte Länge des Rahmenprofils 70 durchgehend erstreckenden Rastvorsprung vorzusehen.

Bei dem dargestellten Ausführungsbeispiel weisen die Rastvorsprünge 82 jeweils einen kreuzförmigen Querschnitt auf, wobei aber auch andere geeignete Querschnitte vorstellbar sind.

Mit Hilfe der Rastvorsprünge 82 lässt sich die Ladungssicherungsschiene 10 auf einfache Weise an einem Laderaumboden montieren und beispielsweise als sogenannte Getränkelatte verwenden. Zur Befestigung der Ladungssicherungsschiene 10 an dem Laderaumboden kann beispielsweise ein Montagewinkel 86 an einem Abschlussprofil 88 des Laderaumbodens angebracht sein (Fig. 6), welcher mit länglichen Rastöffnungen 90 versehen ist, in welche die Rastvorsprünge 82 des Rahmenprofils 70 eingesteckt und eingerastet werden können.

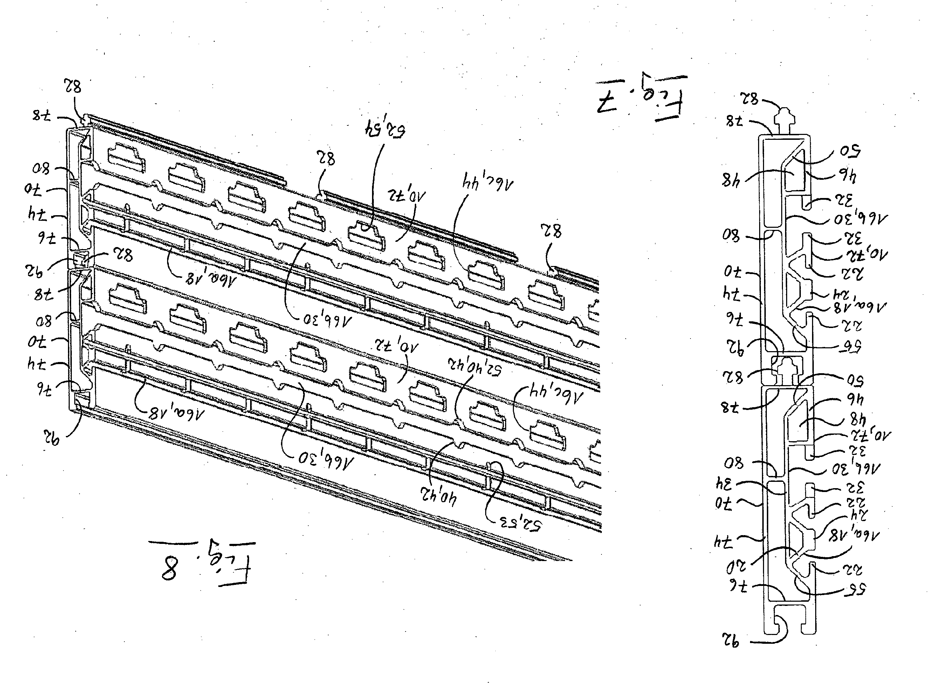

An seiner oberen Wand 76 weist das Rahmenprofil 70 eine sich über die Länge des Rahmenprofils 70 erstreckende Rastnut 92 auf, welche an die Rastvorsprünge 82 angepasst ist, sodass eine zweite Ladungssicherungsschiene 10 der gleichen Art aufgesteckt bzw. mehrere Ladungssicherungsschienen 10 zusammengefügt und miteinander verrastet werden können, wie es in Fig. 7 und 8 dargestellt ist.

Erfährt die Ladungssicherungsschiene 10 eines Rahmenprofils 70 Druck durch Ladung oder durch eine Palette oder Zug durch ein Zurrmittel, wird der kreuzförmige Rastvorsprung 82 des Rahmenprofils 70 in der Rastöffnung 90 des Montagewinkels 86 bzw. in der Rastnut 92 eines unteren Rahmenprofils 70 seitlich derart verschoben und in dieser verriegelt, dass ein Ausheben des Rahmenprofils 70 nicht mehr möglich ist.

### Bezugszeichenliste

- 10: Ladungssicherungsschiene
- 12: Seitenwand
- 14: Ladungssicherungselement
- 14a: Ladebalken
- 14b: Sperrbalken
- 14c: Sperrstange
- 16: Verankerungsmittelaufnahme
- 18: doppel-V-förmige Verankerungsnut
- 20: hinterer Wandabschnitt
- 22: vorderer Wandabschnitt
- 24: mittlerer Steg
- 26: Rastvertiefung
- 28: Verankerungsschuh
- 30: T-förmige Verankerungsnut
- 32: vorderer Wandabschnitt
- 34: Rückwand
- 36: Teilabschnitt
- 38: Stützwand
- 40: Ausklinkung
- 42: Aussparung
- 44: Verankerungsfenster
- 46: vorderer Wandabschnitt
- 48: Hohlkammer
- 50: schräge Außenwand
- 52: Ablauföffnung
- 53: Kerbe
- 54: Ausfräsung
- 55: schräge Außenwand
- 56: Montagemulde
- 58: Rippe
- 60: Spaltbereich
- 62: Abstandshaltevorsprung
- 64: Spaltbereich
- 70: Rahmenprofil
- 72: vordere Seitenwand
- 74: hintere Wand
- 76: obere Wand
- 78: untere Wand
- 80: Stützstrebe
- 82: Rastvorsprung
- 86: Montagewinkel
- 88: Abschlussprofil
- 90: Rastöffnung
- 92: Rastnut

## Patentansprüche

1. Ladungssicherungsschiene (10) für ein Transportfahrzeug oder -behälter, umfassend eine Verankerungsmittelaufnahme (16) eines ersten Typs, welche eine sich in Längsrichtung der Ladungssicherungsschiene (10) erstreckende erste Verankerungslinie definiert, und eine Verankerungsmittelaufnahme (16) eines zweiten Typs, welcher von dem ersten Typ verschieden ist, wobei die Verankerungsmittelaufnahme (16) des zweiten Typs eine zweite Verankerungslinie definiert, die sich im Wesentlichen parallel zu der ersten Verankerungslinie erstreckt,
**dadurch gekennzeichnet, dass**
die Ladungssicherungsschiene (10) eine Wand eines im Wesentlichen rechteckigen Rahmenprofils (70) bildet, wobei an einer Unterseite des Rahmenprofils (70) wenigstens ein Rastvorsprung (82) ausgebildet ist.

2. Ladungssicherungsschiene (10) nach Anspruch 1,
**gekennzeichnet durch**
eine Verankerungsmittelaufnahme (16) eines dritten Typs, welcher von dem ersten und zweiten Typ verschieden ist, wobei die Verankerungsmittelaufnahme (16) des dritten Typs eine dritte Verankerungslinie definiert, die sich im Wesentlichen parallel zu der ersten und zweiten Verankerungslinie erstreckt.

3. Ladungssicherungsschiene (10) nach Anspruch 1 oder 2,
**dadurch gekennzeichnet, dass**
die Verankerungsmittelaufnahmen (16) gewählt sind aus der Gruppe, die umfasst:
eine Verankerungsnut (18) mit doppel-V-förmigem Querschnitt, welcher insbesondere durch einen W-förmigen hinteren Wandabschnitt (20) und zwei sich daran anschließende und Hinterschneidungen bildende vordere Wandabschnitte (22) definiert ist;
eine im Wesentlichen T-förmige Verankerungsnut (30), die an ihrer Vorderseite durch zwei zueinander beabstandete vordere Wandabschnitte (32) definiert ist; und
eine Vielzahl von zueinander beabstandeten Verankerungsfenstern (44).

4. Ladungssicherungsschiene (10) nach einem der vorherigen Ansprüche,
**dadurch gekennzeichnet, dass**
die Verankerungsmittelaufnahmen (16) mit Ablauföffnungen (52) versehen sind, durch welche Flüssigkeit aus den Verankerungsmittelaufnahmen (16) ablaufen kann.

5. Ladungssicherungsschiene (10) nach einem der vorherigen Ansprüche,
**dadurch gekennzeichnet, dass**
eine Ablauföffnung (52) einer Verankerungsnut (30) einen Teil einer Ausklinkung (40) zum Einsetzen eines Verankerungsmittels in die Verankerungsnut (30) bildet.

6. Ladungssicherungsschiene (10) nach einem der vorherigen Ansprüche,
**dadurch gekennzeichnet, dass**
sie durch ein Strangprofil, insbesondere aus Aluminium, bevorzugt eloxiertem Aluminium, gebildet ist.

7. Ladungssicherungsschiene (10) nach einem der vorherigen Ansprüche,
**dadurch gekennzeichnet, dass**
sie im Querschnitt gesehen einen im Wesentlichen trapezförmigen Umriss aufweist, dessen längere Grundseite eine Zugang zu den Verankerungsmittelaufnahmen (16) gewährende Vorderseite der Ladungssicherungsschiene (10) bildet.

8. Ladungssicherungsschiene (10) nach einem der vorherigen Ansprüche,
**dadurch gekennzeichnet, dass**
eine Stützstrebe (80) zwischen der Ladungssicherungsschiene (10) und einer gegenüberliegenden Wand (74) des Rahmenprofils (70) ausgebildet ist.

9. Ladungssicherungsschiene (10) nach einem der vorherigen Ansprüche,
**dadurch gekennzeichnet, dass**
sich der Rastvorsprung (82) in Längsrichtung und insbesondere über die gesamte Länge des Rahmenprofils (70) erstreckt.

10. Ladungssicherungsschiene (10) nach einem der vorherigen Ansprüche,
**dadurch gekennzeichnet, dass**
der Rastvorsprung (82) durchgehend ausgebildet oder in längliche Abschnitte unterteilt ist.

11. Ladungssicherungsschiene (10) nach einem der vorherigen Ansprüche,
**dadurch gekennzeichnet, dass**
an einer Oberseite des Rahmenprofils (70) eine sich in Längsrichtung erstreckende, insbesondere an den Rastvorsprung (82) angepasste, Rastnut (92) ausgebildet ist.

12. Ladungssicherungsschiene (10) nach einem der vorherigen Ansprüche,
**dadurch gekennzeichnet, dass**
der Rastvorsprung (82) derart ausgebildet ist und insbesondere ein kreuzförmiges Querschnittsprofil derart aufweist, dass er sich unter Last in einer Rastnut (92) oder Rastöffnung (90) selbsttätig verriegelt.

## Claims

1. A load securing rail (10) for a transport vehicle or transport container comprising an anchorage means receiver (16) of a first type which defines a first anchorage line extending in the longitudinal direction of the load securing rail (10) and comprising an anchorage means receiver (16) of a second type which is different from the first type, with the anchorage means receiver (16) of the second type defining a second anchorage line which extends substantially in parallel with the first anchorage line,
**characterised in that**
the load securing rail (10) forms a wall of a substantially rectangular frame section (70), with at least one latch projection (82) being formed at a lower side of the frame section (70).

2. A load securing rail (10) in accordance with claim 1,
**characterised by**
an anchorage means receiver (16) of a third type which is different from the first and second types, with the anchorage means receiver (16) of the third type defining a third anchorage line which extends substantially in parallel with the first and second anchorage lines.

3. A load securing rail (10) in accordance with claim 1 or claim 2,
**characterised in that**
the anchorage means receivers (16) are selected from the group comprising:
an anchorage groove (18) having a double V-shaped cross-section which is in particular defined by a W-shaped rear wall section (20) and by two front wall sections (22) adjoining it and forming undercuts;
a substantially T-shaped anchorage groove (30) which is defined at its front side by two mutually spaced apart front wall sections (32); and
a plurality of mutually spaced apart anchorage windows (44).

4. A load securing rail (10) in accordance with any one of the preceding claims,
**characterised in that**
the anchorage means receivers (16) are provided with outflow openings (52) through which liquid can flow out of the anchorage means receivers (16).

5. A load securing rail (10) in accordance with anyone of the preceding claims,
**characterised in that**
an outflow opening (52) of an anchorage groove (30) forms a part of a notch (40) for the insertion of an anchorage means into the anchorage groove (30).

6. A load securing rail (10) in accordance with any one of the preceding claims,
**characterised in that**
it is formed by an extruded section, in particular composed of aluminium, preferably of anodised aluminium.

7. A load securing rail (10) in accordance with any one of the preceding claims,
**characterised in that**
it has a substantially trapezoidal outline viewed in cross-section, with the longer base side of said outline forming a front side of the load securing rail (10) allowing access to the anchorage means receivers (16).

8. A load securing rail (10) in accordance with any one of the preceding claims,
**characterised in that**
a support strut (80) is formed between the load securing rail (10) and an oppositely disposed wall (74) of the frame section (70).

9. A load securing rail (10) in accordance with any one of the preceding claims,
**characterised in that**
the latch projection (82) extends in the longitudinal direction and in particular over the total length of the frame section (70).

10. A load securing rail (10) in accordance with any one of the preceding claims,
**characterised in that**
the latch projection (82) is formed as throughgoing or is divided into longitudinal sections.

11. A load securing rail (10) in accordance with any one of the preceding claims,
**characterised in that**
a latch groove (92), in particular a latch groove matched to the latch projection (82), extending in the longitudinal direction is formed at an upper side of the frame section (70).

12. A load securing rail (10) in accordance with any one of the preceding claims,
**characterised in that**
the latch projection (82) is configured and in partiuclar has a cruciform cross-sectional section such that it latches automatically in a latch groove (92) or latch opening (90) under load.

## Revendications

1. Rail de sécurisation de charge (10) pour un véhicule de transport ou un réceptacle de transport, comprenant un récepteur pour organe d'ancrage (16) d'un premier type, qui définit une première ligne d'ancrage s'étendant en direction longitudinale du rail de sécurisation de charge (10), et un récepteur pour organe d'ancrage (16) d'un second type, différent du premier type, dans lequel le récepteur pour organe d'ancrage (16) du second type définit une seconde ligne d'ancrage s'étendant essentiellement parallèlement à la première ligne d'ancrage,
**caractérisé en ce que**
le rail de sécurisation de charge (10) forme une paroi d'un profilé de cadre (70) sensiblement rectangulaire, dans lequel au moins une saillie d'enclenchement (82) est réalisée sur une face inférieure du profilé de cadre (70).

2. Rail de sécurisation de charge (10) selon la revendication 1,
**caractérisé par** un récepteur pour organe d'ancrage (16) d'un troisième type, différent du premier et du second type, dans lequel le récepteur pour organe d'ancrage (16) du troisième type définit une troisième ligne d'ancrage qui s'étend essentiellement parallèlement à la première et à la seconde ligne d'ancrage.

3. Rail de sécurisation de charge (10) selon la revendication 1 ou 2,
**caractérisé en ce que** les récepteurs pour organes d'ancrage (16) sont choisis parmi le groupe qui inclut :
une rainure d'ancrage (18) avec une section transversale en forme de V double, qui est définie en particulier par un tronçon de paroi postérieur (20) en forme de W et par deux tronçons de paroi antérieurs (22) qui s'y raccordent et qui forment des contre-dépouilles ;
une rainure d'ancrage (30) essentiellement en forme de T, qui est définie au niveau de sa face antérieure par deux tronçons de paroi antérieurs (32) écartés l'un de l'autre ; et
une pluralité de fenêtres d'ancrage (44) écartées les unes des autres.

4. Rail de sécurisation de charge (10) selon l'une des revendications précédentes,
**caractérisé en ce que** les récepteurs pour organe d'ancrage (16) sont dotés d'ouvertures d'écoulement (52) à travers lesquelles un liquide peut s'écouler hors des récepteurs pour organe d'ancrage (16).

5. Rail de sécurisation de charge (10) selon l'une des revendications précédentes,
**caractérisé en ce qu'**une ouverture d'écoulement (52) d'une rainure d'ancrage (30) forme une partie d'un évidement (40) pour mettre en place un organe d'ancrage dans la rainure d'ancrage (30).

6. Rail de sécurisation de charge (10) selon l'une des revendications précédentes,
**caractérisé en ce qu'**il est formé par un profilé extrudé, en particulier en aluminium, de préférence en aluminium anodisé.

7. Rail de sécurisation de charge (10) selon l'une des revendications précédentes,
**caractérisé en ce qu'**il présente en section transversale un contour essentiellement en forme de trapèze, dont la grande base forme un accès vers le côté antérieur du rail de sécurisation de charge (10) qui comporte les récepteurs pour organe d'ancrage (16).

8. Rail de sécurisation de charge (10) selon l'une des revendications précédentes,
**caractérisé en ce qu'**une entretoise de soutien (80) est réalisée entre le rail de sécurisation de charge (10) et une paroi opposée (74) du profilé de cadre (70).

9. Rail de sécurisation de charge (10) selon l'une des revendications précédentes,
**caractérisé en ce que** la saillie d'enclenchement (82) s'étend en direction longitudinale et en particulier sur la totalité de la longueur du profilé de cadre (70).

10. Rail de sécurisation de charge (10) selon l'une des revendications précédentes,
**caractérisé en ce que** la saillie d'enclenchement (82) est réalisée en continu ou bien est subdivisée en tronçons oblongs.

11. Rail de sécurisation de charge (10) selon l'une des revendications précédentes,
**caractérisé en ce qu'**une rainure d'enclenchement (92) s'étendant en direction longitudinale et en particulier adaptée à la saillie d'enclenchement (82) est réalisée sur un côté supérieur du profilé de cadre (70).

12. Rail de sécurisation de charge (10) selon l'une des revendications précédentes,
**caractérisé en ce que** la saillie d'enclenchement (82) est réalisée d'une telle manière et présente en particulier un profil de section transversale en forme de croix, de telle façon qu'elle se verrouille automatiquement sous charge dans une rainure d'enclenchement (92) ou une ouverture d'enclenchement (90).
